# EUROPEAN PATENT APPLICATION

(11) **EP 4 155 218 A1**
(43) Date of publication of application: **29.03.2023**
(21) Application number: 20742789.9
(22) Date of filing: 20.05.2020
(51) Int. Cl.: B65B 31/04, B65B 1/26, B65B 9/207, B65B 51/30, B65B 61/24, B65B 39/00, B65B 39/02, F16K 7/06, B65G 53/46

(54) **DEVICE FOR REMOVING AIR FROM BAG CONTAINING A GRANULAR PRODUCT, MACHINE, AND CORRESPONDING METHOD**

(71) Applicant: Tecnicas Mecanicas Ilerdenses, S.L., 25190 Lleida (ES)
(72) Inventor: ARDERIU CABAU, Xavier, 25190 Lleida (ES); ALMENARA LLADONOSA, Jordi-Avelí, 25190 Lleida (ES); GONZÁLEZ TOLEDANO, Juan José, 25190 Lleida (ES)
(74) Representative: Curell Suñol S.L.P.
(86) International application number: PCT/ES2020/070329
(87) International publication number: WO 2021/234187

(57) **Abstract**

The invention relates to a device (2) for removing air from a bag (100) containing a granular product (102). The air is removed thanks to the supply conduit having an elastically deformable section (14). The device (2) furthermore has obstruction means (10) in charge of closing off the passage of gas in said deformable section (14) and suction means (12) downstream of said deformable section (14). When the bag (100) is full, the obstruction means (10) close off the passage of gas and the suction means (12) are activated. Once all the gas has been removed from the bag (100), sealing means for sealing the bag (100) seal the mouth of the bag (100). The invention also relates to a machine incorporating the device and to an air removal method.

## Description

### Field of the invention

The invention relates to a device for removing air from a bag containing a granular product comprising a supply conduit for supplying a product having a first inlet end for said product and a second outlet end for said product, and defining an inner volume, said supply conduit being configured for receiving in a fitted manner a filling mouth of said bag.

The invention furthermore relates to a machine comprising the device according to the invention and to a method for removing air from a bag containing a granular product.

### State of the art

Machines for filling bags with a granular product in an automated manner are known. In the invention, granular product is understood to be a product with a grain size greater than 50 microns.

There is a large number of industries that package their granular products (plastic pellets, fertilizers, sugar, etc.) in bags or bags made of plastic or raffia, containers having similar characteristics, presented in metered amounts with a capacity of 25 kg.

During the filling process, the granular product is aerated, i.e., air accumulates between the particles, causing the bagged product to take up more space inside the bag than what would correspond to the net volume of the product without air.

If the bag is closed without removing this excess air, the bag adopts an irregular shape. This considerably complicates its palletization. Furthermore, the product settles over time and causes the bag to deform in an unpredictable manner.

Therefore, to optimize handling of the full bags once they exit the bag packing machine, the product must be optimally compacted and the bag must be closed with the smallest possible amount of air, or the bag must be closed removing all the air, as the case may be.

In fact, there are some granular products that require being vacuum packed in bags. This is the case of those products which, due to their characteristics, may lose their properties upon contact with the air due to oxidation. For example, this occurs with many food- or chemical-type granular products such as coffee, chocolate, tea, or others which, upon contact with air, oxidize and lose their properties, for example, their organoleptic properties. It is therefore desirable to vacuum pack these products in bags, precisely to preserve their properties.

Document FR2774657 discloses a device for removing air from a product contained in a bag. The bag packing device uses a bag forming conduit fed from a spool and has a gripping unit for closing the base of the bag that is formed. An amount of the product that must be packed in bags is introduced in a supply conduit envisaged in the forming conduit. The supply conduit is independent of the forming conduit. At least two suction conduits with a cross-section smaller than the supply conduit are placed in the feeding conduit. These two suction conduits are connected independently to an external outer vacuum pump. One of the conduits is porous and is used for removing air from the product contained in the supply conduit, before the metered amount is deposited in the bag. This device has a very complex design. Furthermore, there is a risk that the porous suction conduit may readily become plugged up. Also, since the product is deposited in the bag, it again takes in air, so a second air removal step is necessary.

Another problem inherent to this device consists of arranging suction conduits in the supply conduit. The presence of these conduits can lead to the product accumulating in the supply conduit. From a hygienic point of view, it is desirable for significant amounts of different batches not to build up or be mixed together. This is particularly a risk, in the case of food products, for the quality of the product packed in bags and the possible cross-contamination that the mixing of products of different qualities or types in one and the same facility may cause.

Moreover, in the case of facilities used for packing different products in bags, the presence of suction conduits in the supply conduit hinders cleaning the device and facilitates cross-contamination between batches.

### Summary of the invention

It is an object of the invention to provide a device for removing air from a bag containing a granular product of the type indicated above, having a simple design and being easier to maintain in optimal hygienic conditions than the devices known in the state of the art. Furthermore, the bag must present optimal performance with respect to palletization stability.

This purpose is achieved by means of a device for removing air from a bag of the type indicated above, characterized in that that it further comprises obstruction means, first sealing means for sealing said mouth of said bag, and air suction means, said supply conduit further comprising at least a first elastically deformable section, arranged between said first and second ends, said obstruction means being movable between an open position and a closed position, and said obstruction means being arranged with respect to said first section such that during the operation of said device, in said open position, said obstruction means are suitable for allowing the passage of the product through said supply conduit, and in said closed position, said obstruction means are suitable for deforming said first section in a closure area, and closing said supply conduit in an airtight manner to prevent the passage of gas in said closure area, said first sealing means being arranged downstream of said second end and being movable between an open position and a sealing position for sealing said mouth of said bag, and said suction means being arranged in said supply conduit downstream of said obstruction means and in fluid communication with said inner volume of said supply conduit, such that they can be operated for removing air from said inner volume, when said obstruction means are in said closed position and said first sealing means are in said open position.

First, in the device according to the invention, unlike known cases of the state of the art, air is removed once the product has already been deposited in the bag. That is, the product is already in its final bag packaging position. Accordingly, the product cannot be aerated again due to its falling movement. In this situation, the device allows removing air from the product located inside the bag by suctioning the air contained between the inner volume of the supply conduit and the bag. This suction is carried out right before closing the first sealing means for sealing the mouth of the bag. This provides a very simple and, therefore, very robust design.

Removing air from the bag is one of the effects that are relevant to the performance of palletizing bags, among others. It has been found that the initial stiffness of the bag, provided by the reduction of the air content between the particles of the product packed in bags, together with other packaging operations of the bag, significantly favor the stability of palletized bags. As a result, the regulations relative to palletized loads can be fulfilled.

Particularly in the logistics sector, there is a specific regulation regarding the requirements for considering whether or not a palletized load is stable. This stability assures that the load can be transported without being deformed and that it can comply with transport safety.

In the invention, the sealing means are preferably welding electrodes for sealing the bag by sealing means with thermal heating through a resistance or with electrical impulses, ultrasounds, or other technologies suitable for weld sealing. The electrodes can first obstruct the mouth of the bag, and once obstructed, close it, for example, by welding. Optionally, the sealing means may include pre-grips obstructing the mouth of the bag before the electrodes start the welding method, *per se,* for closing or sealing the mouth.

The invention further includes a number of preferred features that are object of the dependent claims and the utility of which will be highlighted hereinafter in the detailed description of an embodiment of the invention.

Additionally, to achieve a regular shape of the bag during suctioning, it has been found that it is very suitable when said first sealing means further comprise] a suction position, said suction position being remote from said open position and close to said sealing position, and during operation, said suction means can be operated when said obstruction means are in said closed position and said first sealing means are in said suction position. Furthermore, since the position is close to the sealing position, once the air has been removed from the bag, the closure to begin sealing is very rapid, and air is prevented from getting into the bag again. This even further improves palletization and accordingly the stability of the pallet.

For the purpose of obtaining an easy-to-repair device, said first section is preferably manufactured in an elastically deformable laminar or film-like material. The laminar material may consist of an elastically deformable flexible sleeve assembled in the supply conduit through fixing braces for fixing the sleeve to the rigid part of the conduit.

The invention also has the objective of the device having a prolonged durability, but at the same time being optimized in regard to power consumption. To that end, in another embodiment, said first section is a tubular conduit made of an elastomeric material with a wall thickness comprised between 1 and 3 mm. The smaller the thickness of the first section, the easier it is to deform it. As a result, consumption of the operation of the obstruction means is also reduced.

In another particularly simple embodiment, said obstruction means comprise at least a first clamp movable between said open and closed positions of said obstruction means, said first section being arranged with respect to said first clamp so as to be deformed by said first clamp.

In another embodiment the objective of which is to increase the regulation rate, said obstruction means comprise a second clamp, said first and second clamps being arranged facing one another, said first section being arranged between said first and second clamps, and in that said first and second clamps are movable with respect to one another between said open and closed positions of said obstruction means. Additionally, in a particularly preferred manner, the first and second clamps have press rollers, which prevent pinching in the first section, which may cause unwanted tears.

In another embodiment the object of which is to provide a more versatile and compact machine, said device comprises a forming device for forming said bag with a forming conduit, said forming conduit being formed by said supply conduit, and in that said forming device for forming said bag is located downstream of said suction means. Again, this configuration is much simpler than those known in the state of the art, because the supply conduit and the forming conduit are one and the same element.

Also to improve air removal from inside the supply conduit and the bag, preventing the walls of the bag from sticking to one another while suctioning the air when a rapid suction is performed, the device comprises separating elements inside said supply conduit, at said second end, said separating elements being movable between a withdrawn position in which said separating elements are located remote from said first sealing means, and a separation position in which said separating elements are interposed between said first sealing means. As a result, it is guaranteed that the suction can be performed in a complete manner, without the actual sheet of the bag being closed and preventing the continued suctioning of air.

Also for the purpose of obtaining a bag having the most regular shape possible once it is closed, the device according to the invention further comprises a shaping device for providing a substantially shape to said bag.

The invention also relates to a machine for filling a bag with a granular product, characterized in that it comprises a device for removing air from a bag according to the invention.

Preferably, said machine is a form, fill, and seal (FFS) machine, and more preferably the supply conduit is arranged vertically.

Likewise, to solve the problem of removing the air from a bag in a simple and reliable manner, the invention also relates to a method characterized in that it comprises the steps of: arranging a supply conduit for supplying a product having a first inlet end for said product and a second outlet end for said product, and defining an inner volume, said supply conduit being configured for receiving an mouth of said bag in a fitted manner, and at least a first elastically deformable section arranged between said first and second ends, arranging first sealing means for sealing said mouth of said bag, said first sealing means being movable between an open position and a sealing position for sealing said mouth of said bag, arranging obstruction means for elastically deforming said first section, said obstruction means being movable between an open position and a closed position, arranging suction means in fluid communication with said inner volume of said supply conduit, downstream of said obstruction means, and when said bag is full moving said obstruction means from said open position to said closed position for deforming said first section in a closure area, and closing said supply conduit in an airtight manner, preventing the passage of gas through said closure area, and then removing the air from said inner volume of said supply conduit through said suction means, keeping said first sealing means in said open position.

Also, to facilitate the bag having the most regular shape possible once the air has been removed, and therefore to favor palletization, said first sealing means are movable between an open position, a semi-open position, and a sealing position for sealing said mouth of said bag, such that before the step of activating said suction means, said sealing means are moved from said open position to said semi-open position. As a result of the semi-open position, where air begins to come out of the inside of the bag, the bag adopts a substantially parallelepipedic and regular shape that favors palletization.

Also to achieve the most regular bag shape possible, in said air removal step a low pressure comprised between 100 and 200 mbar is generated, depending on the product to be packed in a bag and the performance of product with respect to its container.

Finally, in another embodiment, the objective of which is to prevent early closure of the mouth of the bag during the air removal or suction step, the method comprises a step of interposing separating elements between said first sealing means during said air removal step.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a schematic view of a machine for filling a bag with a granular product comprising a device according to the invention for removing air from a bag.
Figure 2 shows a schematic view of the device for removing air from a bag containing a granular product of Figure 1.
Figures 3 to 5 show schematic views of the process for removing air from a bag containing a granular product according to the invention.
Figure 6 shows a second embodiment of the device for removing air from a bag containing a granular product according to the invention.

### Detailed description of embodiments of the invention

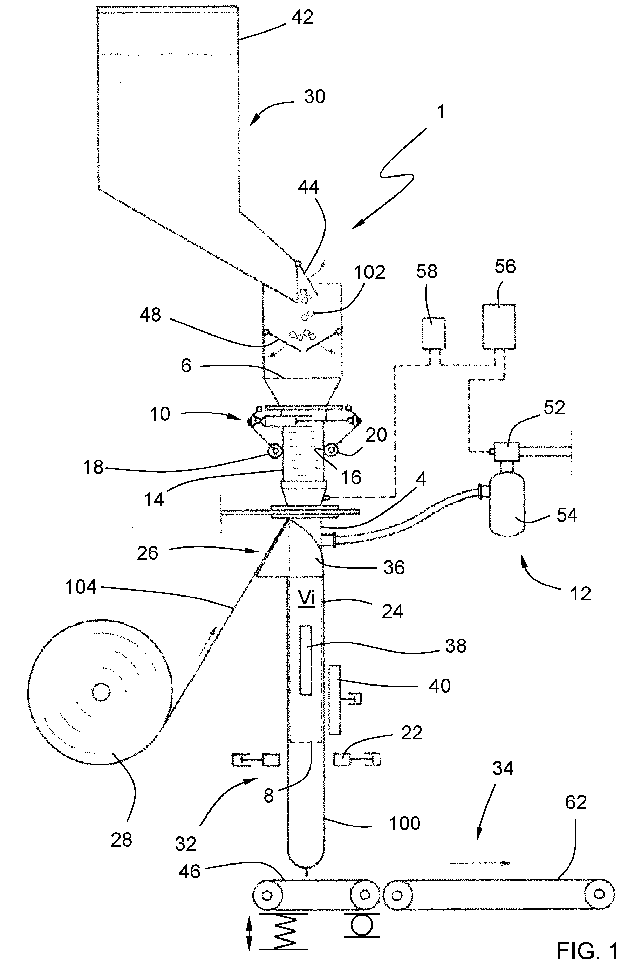

Figures 1 to 5 show a first embodiment of a machine 1 and a device 2 according to the invention for removing air from a bag 100 containing a granular product 102.

In particular, this embodiment of the machine 1 consists of a machine 1 for packing in bags, said machine being known in the art as a FFS (form, fill, and seal) machine for forming, filling, and sealing the bag 100.

The machine 1 has a forming area 26 for forming the bag 100, a supply area 30, a filling and sealing area 32, and finally a evacuation area 34 for evacuating a full bag 100.

In the forming area 26, there is provided a spool 28 of laminar or film-like material for supplying the laminar material 104 from which the bag 100 is formed. Usually, this laminar material 104 is a sheet of polymer or composite material, such as polyethylene, polypropylene, polyester, or composite materials with at least one metal foil such as aluminum foil, for example.

The bag 100 is formed through a forming cone 36 at the start of the forming conduit 24. To that end, the laminar material 104 is driven around the forming cone 36 in charge of imparting the tubular shape to the laminar material. Then downstream of the forming cone 36 there are provided drive belts 38 which, by way of a caterpillar track, pull the laminar material 104 downwards to advance it along the forming conduit 24. These drive belts 38 are arranged on both sides of the forming conduit 24, such that only one of them can be seen in Figure 1. Therefore, the other drive belt 38 would be arranged in the rear part of the forming conduit 24. Moreover, there is also provided a longitudinal welding electrode 40 which is in charge of forming a longitudinal weld closing the tubular shape of the laminar material 104, after which the tube forming the bag 100 ends up being closed.

Alternatively, the laminar material 104 can be a sheet of polymer material or a sheet made up of a polymer material and a metallic material but formed already into a tubular shape. In this case, it is not necessary to arrange a forming cone and a forming conduit.

In the supply area 30 there is provided an upper hopper 42 for supplying the granular product by gravity. To that end, there is provided a hatch 44 controlled from a central control not shown in detail.

The filling and sealing area 32 is in charge of receiving the granular product from the hopper 42, packing it in a bag, and finally closing the bag 100. It can be seen in Figure 1 that below the bag 100 there is provided a first agitation device 46 incorporating a shaping device for imparting a substantially parallelepipedic shape to the bag 100, not shown in detail, which shapes the bag during air removal, and in this case is also a first pivoting conveyor belt, where FFS does not usually incorporate this belt. This first agitation device 46 allows agitating the base of the bag 100 during filling to increase the production rate and favor distribution of the product, and accordingly the reduction of the air gaps between the particles of the product.

Finally, in the evacuation area 34 there is provided a second conveyor belt 62 which is in charge of evacuating the bag 100 once it has been closed.

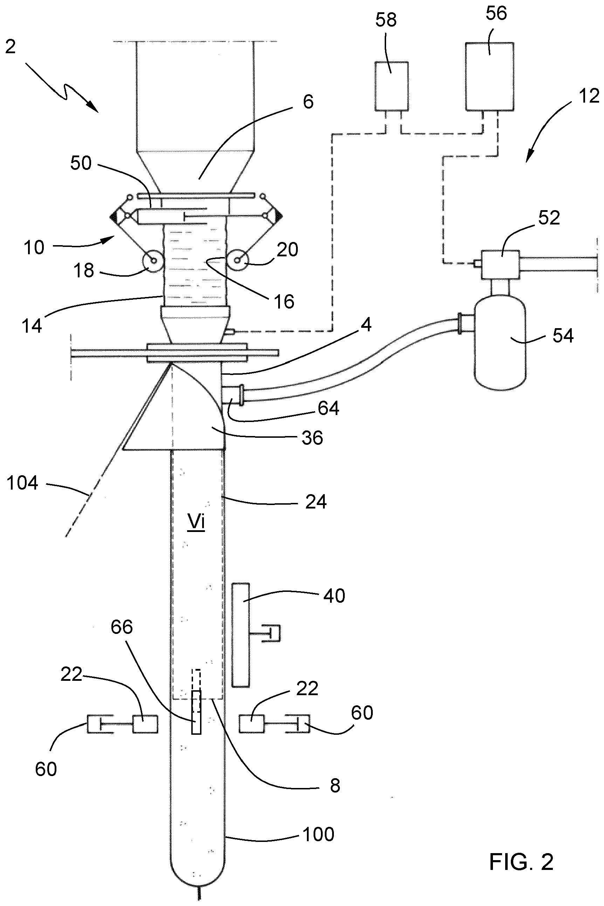

Figure 2 shows in detail the device 1 according to the invention for removing air from a bag 100 containing a granular product 102.

The device 1 comprises as the main elements: a supply conduit 4 for supplying a product 102, obstruction means 10, first sealing means 22 for closing the mouth of the bag 100, and suction means 12.

First, the supply conduit 4 has a first inlet end 6 for the product 102 and a second outlet end 8 for the product 102. In this embodiment, the device 2 comprises a forming device for forming the bag 100 with a forming conduit 24, the forming conduit 24 being formed by said supply conduit 4. The forming device is located downstream of the suction means 12. The first end 6 of the supply conduit 4 is connected with the hopper 42 and downstream of a weighing machine 48 which is in charge of receiving a metered amount of the hopper 42.

Moreover, the second end 8 is configured for receiving the filling mouth of the bag 100 in a fitted manner. In this embodiment, since the machine 1 is an FFS machine, the filling mouth of the bag is defined by the tubular-shaped laminar material 104 coming down the forming conduit 24.

The supply conduit 4 of this embodiment comprises a first elastically deformable section 14. In particular, this first section 14 is made of an elastically deformable laminar material forming a tubular conduit made of an elastomeric material such as, for example, polyurethane or silicone, with a wall thickness comprised between 1 and 3 mm. This first section 14 is arranged between the first and second ends 6, 8, and in particular, between the forming cone 36 and the obstruction means 10.

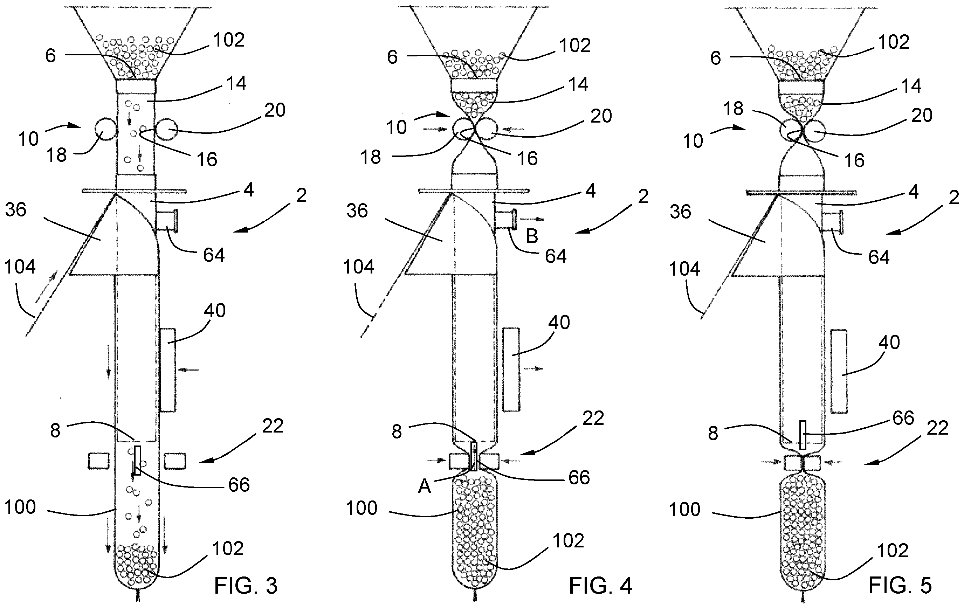

The obstruction means 10 are movable between an open position shown in Figures 1 to 3 and a closed position shown in Figures 4 and 5. As can be seen in the figures, these obstruction means 10 are arranged with respect to the first section 14 such that during the operation of the device 1, in the open position, they allow the passage of the product 102 through the supply conduit 4. In contrast, in the closed position, these obstruction means deform the first section 14 in the closure area 16 and close the supply conduit 4 in an airtight manner to prevent the passage of gas in this closure area 16.

The obstruction means 10 may have various configurations. In a first embodiment, the obstruction means have a first movable clamp that can be operated between the open and closed positions of the obstruction means 10 against a fixed surface, and the first section 14 being arranged with respect to the first clamp so as to be deformed by said first clamp in the closed position. Nevertheless, in this embodiment of Figures 1 to 5, the obstruction means comprise first and second clamps 18, 20 arranged facing one another, with the first section 14 arranged between these first and second clamps 18, 20. The first and second clamps 18, 20 are preferably formed from freely rotating rollers. As a result, the risk of tears in the first section 14 is reduced. These first and second clamps 18, 20 are movable with respect to one another between the open and closed positions of the obstruction means 10. The first and second clamps 18, 20 are operated through a first drive 50 which, in this case, is a common pneumatic cylinder. Alternatively, other mechanisms such as independent pneumatic cylinders, a stepper motor, or the like, could be used.

Preferably, when the laminar material 104 for manufacturing the bag is a polymer sheet, the first sealing means 22 are welding electrodes for heat or ultrasonic welding. These electrodes are operated by second pneumatic cylinder-type drives 60 which allow cutting and welding. Furthermore, the electrodes can be moved by means of different types of drive: servo drive, geared motor, pneumatic actuator, etc. Also in an alternative embodiment, an electrode can be fixed, whereas the other electrode of the first sealing means can be movable.

The first sealing means 22 are arranged downstream of the second end 8 of the supply conduit 4 and are movable between an open position and a sealing position for sealing the mouth of the bag 100.

The open position can be seen in Figure 2, whereas the closed position can be seen in Figure 5. In a particularly preferred manner, the first sealing means 22 further comprise a suction position which can be seen in Figure 4, remote from the open position and close to the sealing position, for allowing air to be suctioned through said suction means, preventing unwanted creases in the bag while suctioning the air.

These first sealing means 22 also include a cutting device, not shown in detail, for separating the bag 100 from the rest of the laminar material once it has already been sealed.

The suction means 12 are arranged in the supply conduit 4 downstream of the obstruction means 10. Unlike the devices of the state of the art, in the invention the obstruction means 10 are in fluid communication with the inner volume Vi of the supply conduit 4. The suction means 12 comprise an air removal device 52 such as, for example, a pneumatic cylinder or pump, which has a filter 54. Furthermore, the suction means 12 also comprise a control 56 for controlling the air removal device 52 and a vacuum sensor 58 to determine the level of vacuum generated within the inner volume Vi of the supply conduit 4.

Therefore, the suction means 12 can be operated for removing air from the inner volume Vi of the supply conduit 4 when the obstruction means 10 are in said closed position and the first sealing means are in the open position. Evidently, the removal of air from the inner volume Vi when the bag is at the end of the supply conduit 4 results in the removal of air from inside the bag 100.

Optionally, to prevent the sheet of the bag 100 from sticking during air removal, the device 2 also comprises separating elements 66 at said second end 8 of said supply conduit 4 movable between a withdrawn position which can be seen in Figure 2 in discontinuous conduits and a separation position in continuous conduits, in which said separating elements 66 are arranged in a central plane of said supply conduit 4 between said first sealing means 22 before said suction means 12 are operated.

The method according to the invention for removing air from a bag 100 containing a granular product 102 using the device 2 described above is explained below based on Figures 3 to 5.

As has already been explained, the machine 1 of this embodiment is an FFS machine, such that the laminar material 104 is driven towards the forming cone 36 by the drive devices (see Figure 1). The longitudinal welding electrode 40 welds the tubular envelope of laminar material 104 coming down the forming conduit, whereas the first sealing means 22, i.e., the first lower welding electrodes, form the base of the bag 100. In this position, the bag 100 is arranged as depicted in Figure 3.

In the supply area 30, a metered amount of granular product 102 is supplied from the hopper 42 through the hatch 44. In a weighing step, the weighing machine 48 is in charge of determining the metered amount that will be used to fill the bag 100.

Once the metered amount is prepared, it is supplied to the first inlet end 6 for the product 102. Then the product 102 falls through the supply conduit 4 to the bag 100 which is located at the second end 8.

At this time, the obstruction means 10 and the first sealing means 22 are in their respective open position, until the corresponding metered amount of granular product 102 has finished falling into the bag 100.

After this time, in the method according to the invention the obstruction means 10 are moved from the open position of Figure 3 to the closed position of Figure 4. The rollers of the first and second clamps 18, 20 thereby press on the closure area 16, the first section 14 is deformed, and, accordingly, the supply conduit 4 is closed in an airtight manner, preventing the passage of gas through the closure area 16.

In this preferred embodiment, the first sealing means 22 are movable between an open position of Figure 3, a semi-open position of Figure 4, and finally a sealing position for sealing the mouth of the bag 100 shown in Figure 5.

Therefore, once the supply conduit 4 is duly closed in a gas-tight manner, before the step of activating the suction means 12, the sealing means 22 are moved from the open position to the semi-open position of Figure 4 to facilitate the bag adopting a parallelepipedic shape.

At this time, the separating elements 66, by way of a hollow conduit, are moved from the withdrawn position of Figure 3 to the separation position of Figure 4.

From this situation, the suction means 12 are activated for removing air existing in the inner volume Vi of the supply conduit 4, whereas the first sealing means 22 are kept in the open position. To that end, the control 58 activates the air removal device (see Figure 1) and the air is removed from within the inner volume Vi and from the bag 10 through the suction outlet 64, in the direction of arrows A and B of Figure 4, towards the air removal device 52. By way of example, in this embodiment a low pressure comprised of 130 mbar is generated in the air removal step.

Other embodiments of the device 2 according to the invention which share a large part of the features described in the preceding paragraphs are shown below. Accordingly, only the different elements will be described hereinafter, whereas for the common elements reference is made to the description of the first embodiment.

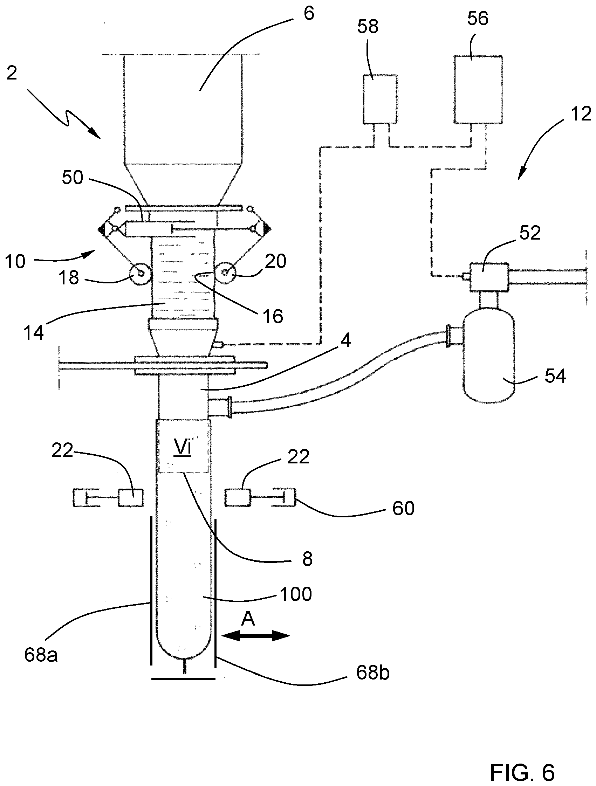

The device 2 of Figure 6 is substantially identical to that of Figure 2. The device 1 comprises as its main elements: a supply conduit 4 for supplying a product 102, obstruction means 10, first sealing means 22 for closing the mouth of the bag 100, and suction means 12.

Therefore, in this case, the device 1 differs in that the bag 100 is already pre-shaped at a station not shown in Figure 6. Therefore, in this case, the forming conduit envisaged in the embodiment of Figure 2 is not necessary.

Moreover, in this case, the device does not have the separating elements 66 envisaged for being arranged between the first sealing means 22 during the removal of air from the bag 100 either.

In contrast, in this case, it can be seen that the device 2 of Figure 6 comprises a shaping device 68a, 68b for providing a substantially parallelepipedic shape to the bag 100. The shaping device 68a, 68b has a substantially parallelepipedic box shape so as to demarcate the shape the bag acquires when it is filled. Furthermore, the wall indicated with reference 68b in the form of a one- or two-leaf movable hatch can be opened or closed in the direction of arrow A of Figure 6 to allow the exit of the full bag.

## Claims

1. A device (2) for removing air from a bag (100) containing a granular product (102) comprising:
[a] a supply conduit (4) for supplying a product having a first inlet end (6) for said product (102) and a second outlet end (8) for said product (102), and defining an inner volume (Vi), said supply conduit (4) being configured for receiving in a fitted manner a filling mouth of said bag (100), **characterized in that** it further comprises
[b] obstruction means (10),
[c] first sealing means (22) for sealing said mouth of said bag (100), and
[d] air suction means (12),
[e] said supply conduit (4) further comprising at least a first elastically deformable section (14), arranged between said first and second ends (6, 8),
[f] said obstruction means (10) being movable between:
[i] an open position and
[ii] a closed position, and
[g] said obstruction means (10) being arranged with respect to said first section (14) such that during the operation of said device (2),
[i] in said open position, said obstruction means (10) are suitable for allowing the passage of the product (102) through said supply conduit (4), and
[ii] in said closed position, said obstruction means (10) are suitable for deforming said first section (14) in a closure area (16), and closing said supply conduit (4) in an airtight manner to prevent the passage of gas in said closure area (16),
[h] said first sealing means (22) being arranged downstream of said second end (8) and being movable between
[i] an open position and
[ii] a sealing position for sealing said mouth of said bag (100), and
[j] said suction means (12) being arranged in said supply conduit (4) downstream of said obstruction means (10) and in fluid communication with said inner volume (Vi) of said supply conduit (4), such that they can be operated for removing air from said inner volume (Vi), when said obstruction means (10) are in said closed position and said first sealing means (22) are in said open position.

2. The device according to claim 1, **characterized in that** said first sealing means (22) further comprise [iii] a suction position, said suction position being:
[a] remote from [i] said open position and
[b] close to [ii] said sealing position, and
**in that** during operation, said suction means (12) can be operated when said obstruction means (10) are in said closed position and said first sealing means (22) are in said suction position.

3. The device (2) according to claim 1 or 2, **characterized in that** said first section (14) is manufactured in an elastically deformable laminar material.

4. The device (2) according to claim 3, **characterized in that** said first section (14) is a tubular conduit made of an elastomeric material with a wall thickness comprised between 1 and 3 mm.

5. The device (2) according to any one of claims 1 to 4, **characterized in that** said obstruction means (10) comprise at least a first clamp movable between said open and closed positions of said obstruction means, said first section (14) being arranged with respect to said first clamp so as to be deformed by said first clamp.

6. The device (2) according to claim 5, **characterized in that** said obstruction means (10) comprise a second clamp, said first and second clamps being arranged facing one another, said first section (14) being arranged between said first and second clamps (18, 20), and **in that** said first and second clamps (18, 20) are movable with respect to one another between said open and closed positions of said obstruction means (10).

7. The device (2) according to any one of claims 1 to 6, **characterized in that** it comprises a forming device for forming said bag (100) with a forming conduit, said forming conduit being formed by said supply conduit (4), and **in that** said forming device for forming said bag (100) is located downstream of said suction means (12).

8. The device (2) according to any one of claims 1 to 7, **characterized in that** it comprises separating elements (66) inside said supply conduit (4), at said second end (8), said separating elements (66) being movable between:
[i] a withdrawn position in which said separating elements (66) are located remote from said first sealing means (22), and
[ii] a separation position in which said separating elements (66) are interposed between said first sealing means (22).

9. The device (2) according to any one of claims 1 to 8, **characterized in that** it further comprises a shaping device (68a, 68b) for providing a substantially parallelepipedic shape to said bag (100).

10. A machine (1) for filling a bag (100) with a granular product (102), **characterized in that** it comprises a device (2) for removing air from a bag (100) according to any one of claims 1 to 9.

11. A method for removing air from a bag (100) containing a granular product (102), **characterized in that** it comprises the steps of:
[a] arranging a supply conduit (4) for supplying a product (102) having a first inlet end (6) for said product (102) and a second outlet end (8) for said product (102), and defining an inner volume (Vi), said supply conduit being configured for receiving an mouth of said bag (100) in a fitted manner, and at least a first elastically deformable section (14) arranged between said first and second ends (6, 8),
[b] arranging first sealing means (22) for sealing said mouth of said bag (100), said first sealing means (22) being movable between:
[i] an open position and
[ii] a sealing position for sealing said mouth of said bag (100),
[c] arranging obstruction means (10) for elastically deforming said first section (14), said obstruction means (10) being movable between:
[i] an open position and
[ii] a closed position,
[d] arranging suction means (12) in fluid communication with said inner volume (Vi) of said supply conduit (4), downstream of said obstruction means (10), and
when said bag (100) is full
[e] moving said obstruction means (10) from said open position to said closed position for deforming said first section (14) in a closure area (16), and closing said supply conduit (4) in an airtight manner, preventing the passage of gas through said closure area (16), and then
[f] removing the air from said inner volume (Vi) of said supply conduit (4) through said suction means (12), keeping said first sealing means (22) in said open position.

12. The method according to claim 11, **characterized in that** said first sealing means (22) are furthermore movable to a [iii] suction position, said suction position being
[a] remote from [i] said open position and
[b] close to [ii] said sealing position, for allowing air to be suctioned through said suction means (12), such that before the step of activating said suction means (12), said sealing means (22) are moved from said open position to said suction position.

13. The method according to any one of claims 11 or 12, **characterized in that** in said air removal step a low pressure comprised between 100 and 200 mbar is generated.

14. The method according to any one of claims 11 to 13, **characterized in that** it comprises a step of interposing separating elements (66) between said first sealing means (22) during said air removal step.
